# EUROPÄISCHE PATENTSCHRIFT

(11) **EP 3 165 802 B1**
(45) Veröffentlichungstag und Bekanntmachung des Hinweises auf die Patenterteilung: **05.09.2018**
(21) Anmeldenummer: 16002182.0
(22) Anmeldetag: 10.10.2016
(51) Int. Cl.: F16L 3/04, B60R 16/02, F16L 3/137, F16L 3/237

(54) **ANORDNUNG ZUM BEFESTIGEN EINES FLEXIBLEN ROHRES, INSBESONDERE EINES WELLROHRES, AN EINEM GEGENSTAND**
ASSEMBLY FOR FIXING A FLEXIBLE TUBE, IN PARTICULAR A CORRUGATED TUBE, TO AN OBJECT
SYSTÈME DE FIXATION D'UN TUYAU SOUPLE, EN PARTICULIER D'UN TUYAU ONDULÉ, À UN OBJET

(30) Priorität: 04.11.2015 DE 102015014226
(43) Veröffentlichungstag der Anmeldung: 10.05.2017
(73) Patentinhaber: MAN Truck & Bus AG, 80995 München (DE)
(72) Erfinder: Grübl, Wolfgang, 80639 München (DE)
(74) Vertreter: v. Bezold & Partner Patentanwälte - PartG mbB

(56) Entgegenhaltungen:
- DE-A1-102010 007 983
- US-A- 6 010 099
- US-A1- 2014 131 528
- US-A1- 2015 237 770

## Beschreibung

Die Erfindung betrifft eine Anordnung zum Befestigen eines flexiblen Rohres, insbesondere eines Wellrohres, an einem Gegenstand, insbesondere an einem Bauteil eines Fahrzeugs.

Im Fahrzeugbereich werden Wellrohre unter anderem zur Leitungsführung eingesetzt. So ist es üblich, flexible Leitungen, wie sie z. B. zur Versorgung von elektrischen Verbrauchern, wie z. B. Außenmarkierungsleuchten, oder zur Übertragung von Steuersignalen zwischen Steuergeräten und Sensoren verwendet werden, zu sich verzweigenden Leitungsbündeln zusammenzufassen. Um die Leitungsbündel, die auch als Kabelbäume bezeichnet werden, vor mechanischen Einflüssen zu schützen, werden diese häufig, zumindest abschnittweise, in flexiblen Wellrohren geführt, die meist aus Kunststoff gefertigt sind und das Leitungsbündel nur lose umschließen. Um einen derartigen Wellschlauch an einem Bauteil des Fahrzeugs zu befestigen, ist es aus der Praxis bekannt, das Wellrohr mittels eines Kabelbinders an dem Bauteil zu befestigen, wobei der Kabelbinder um das Wellrohr und um das Bauteil gelegt und festgespannt wird. Da der Kabelbinder direkt am Wellrohr anliegt, hat dieser bekannte Ansatz den Nachteil, dass ein Festspannen des Kabelbinders dazu führen kann, dass das Wellrohr zu stark gequetscht wird.

Im Stand der Technik sind auch Montagevorrichtungen bekannt, die ein nahezu beschädigungsfreies Befestigen von Leitungsbündeln oder Rohren ermöglichen. Beispielsweise offenbart die US 2014/0131528 A1 eine Halterung zum Anbringen eines Kabelbaums an eine dünne Leiste, bei der starke Quetschungen des Kabelstrangs vermeiden werden. Die Halterung weist dabei eine das Leitungsbündel umgebende Umklammerung auf, die zunächst mittels zweier Führungsnute an der Leiste fixiert wird und anschließend mittels eines sowohl die Umklammerung als auch die Leiste umgebenden Kabelbinders fest verspannt wird. Nachteilig an dieser Lösung ist allerdings, dass die Montagevorrichtung eine spezielle Art von planarer Auflage zur Befestigung erfordert.

Ferner ist aus der US 6 010 099 A eine bogenförmige Schelle zur Befestigung eines von einer Spiralfeder umgebenen Leitungsbündel an einem Zugwaggon bekannt. Die aus einem starren Material bestehende Halterung weist dabei einen bogenförmigen Bereich auf, der die Spiralfeder teilweise umgibt. An diesen bogenförmigen Bereich der Halterung schließen sich beidseitig flügelartige Ausstellungen an, mittels derer die Schelle auf dem Zugwaggon aufliegt und die zudem Löcher zum Durchführen eines Spanngurtes aufweisen. Durch den Gurt erfolgt die Fixierung an der Unterlage, wobei der bogenförmige Bereich ein starkes Quetschen der Kabel verhindert. Allerdings ist auch diese Befestigungsvorrichtung auf planare Unterlagen beschränkt.

Die Offenlegungsschrift DE 10 2010 007 983 A1 offenbart eine Befestigungsvorrichtung zur Fixierung eines Rundprofilelements an einem Rundprofilträger. Die Halterung besitzt dabei einen S-förmigen Querschnitt, wodurch zwei Aufnahmeabschnitte gebildet werden, von denen einer den Rundprofilträger und der zweite das Rundprofilelement umgibt. Die eigentliche Fixierung erfolgt wiederum mittels eines Kabelbinders, der zum Teil am Außenumfang des Befestigungsmittels geführt wird. Nachteilig an dieser Konstruktion ist allerdings, dass das Anbringen der Befestigungsvorrichtung ein starkes Aufbiegen der Endbereiche der Halterung erfordert. Zudem handelt es sich bei dem Trägerrohr in den meisten Fällen um ein massives und damit entsprechend stabiles Objekt, wodurch für diesen Bereich eigentlich kein Quetschschutz nötig ist und somit bei dieser Vorrichtung unnötig Material verbraucht wird.

Es ist somit eine Aufgabe der Erfindung, eine verbesserte Anordnung zum Befestigen eines flexiblen Rohres, insbesondere eines Wellrohres, an einem Gegenstand bereitzustellen, mit der Nachteile herkömmlicher Techniken vermieden werden können. Die Aufgabe der Erfindung ist es insbesondere, eine Anordnung zum Befestigen eines flexiblen Rohres unter Verwendung eines Spannbandes, z. B. eines Kabelbinders bereitzustellen, bei der das Risiko einer starken Quetschung des flexiblen Rohres vermieden wird.

Diese Aufgaben werden durch eine Anordnung mit den Merkmalen des Anspruchs 1 gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung wird eine Anordnung zum Befestigen eines flexiblen Rohres an einem Gegenstand bereitgestellt. Der Gegenstand, an dem das flexible Rohr befestigt wird, kann insbesondere ein Bauteil eines Fahrzeugs sein. Die Anordnung umfasst ein flexibles Rohr, das auf den Gegenstand gelegt ist. Unter einem flexiblen Rohr soll ein langer, zylindrischer Hohlkörper verstanden werden, z. B. zur Durchführung von Fluiden oder elektrischen Leitungen, der ferner biegsam ist bzw. in Längsrichtung krümmbar ist. Das flexible Rohr kann insbesondere ein Wellrohr sein. Von dem Begriff "flexibles Rohr" sollen auch flexible Rohre umfasst sein, die aufgrund eines vergleichsweise kleinen Querschnitts üblicherweise als Schläuche bezeichnet werden. Das flexible Rohr kann insbesondere auch ein Wellschlauch sein. Durch das flexible Rohr kann z. B. mindestens eine elektrische Leitung geführt sein. Durch das flexible Rohr kann auch eine Fluidleitung, z. B. eine Spritzwasserleitung für eine Scheibenwaschanlage oder Lichtwellenleiter geführt sein. Das flexible Rohr kann auch ohne Inhalt sein.

Die Anordnung umfasst ferner ein Abdeckelement für das flexible Rohr, welches sich beidseitig von dem flexiblen Rohr auf dem Gegenstand abstützt und das flexible Rohr an zumindest einem Abschnitt bogenartig bzw. brückenartig überdeckt, d. h. unter Ausbildung einer Wölbung. Das Abdeckelement kann beispielsweise in Längsrichtung des flexiblen Rohres gesehen einen U-förmigen, einen bogenförmigen oder einen V-förmigen Querschnitt aufweisen.

Die Anordnung umfasst ferner ein Spannband, das um eine Außenseite des Abdeckelements und um eine dem flexiblen Rohr abgewandte Seite des Gegenstands herumgeführt ist. Um eine besonders schnelle Montage zu ermöglichen, kann das Spannband beispielsweise als Rastband, weiter vorzugsweise als selbstverrastendes Rastband ausgeführt sein. Das Spannband kann beispielsweise ein Kabelbinder sein.

Die erfindungsgemäße Anordnung bietet den besonderen Vorzug, dass das Spannelement nur am Abdeckelement und am Gegenstand unmittelbar anliegt und angreift, das flexible Rohr jedoch nicht berührt. Das Spannelement erzeugt somit eine zum flexiblen Rohr gerichtete Spannkraft, die nur mittelbar über das Abdeckelement und den Gegenstand auf das flexible Rohr wirkt. Das Abdeckelement dient hierbei als Quetschschutz für das flexible Rohr und fungiert als Quetschschutzelement. Ein zu starkes Quetschen des Wellrohres kann somit vermieden werden. Gleichzeitig wird eine schnelle, unkomplizierte Befestigungsmöglichkeit für das flexible Rohr bereitgestellt. Der erfindungsgemäße Befestigungsansatz kann an allen problematischen Stellen an einem Fahrzeug eingesetzt werden, an denen das flexible Rohr gequetscht werden kann, z. B. an Stellen, an denen dünne Wellrohre mit wenig Füllgrad, z. B. zur elektrischen Versorgung von Außenmarkierungsleuchten, zum Einsatz kommen.

Der Bereich, an dem das flexible Rohr auf dem Gegenstand aufliegt, bildet vorzugsweise eine sich in Längsrichtung des flexiblen Rohres erstreckende Mantellinie des flexiblen Rohres. Die Außenseite des Abdeckelements ist vorzugsweise eine dem Rohr abgewandte Außenfläche des Abdeckelements. Die Innenseite des Abdeckelements bildet vorzugsweise die dem flexiblen Rohr zugewandte Außenfläche des Abdeckelements, die einen Aufnahmeraum für das flexible Rohr ausbildet. Die dem flexiblen Rohr abgewandte Seite des Gegenstands umfasst vorzugsweise denjenigen Teil der Außenfläche des Gegenstands, an dem das Rohr nicht aufliegt.

Ein besonders wirksamer Quetschschutz kann erzielt werden, falls das Abdeckelement aus einem nichtelastischen Werkstoff hergestellt ist. Eine besonders vorteilhafte Variante sieht hierbei vor, dass das Abdeckelement als nichtelastisches Kunststoffbauteil ausgeführt ist. Das Abdeckelement kann jedoch auch aus einem anderen Werkstoff, wie z. B. Metall oder Holz, gebildet sein.

Gemäß einer bevorzugten Ausführungsform weist das Abdeckelement zwei Schenkel auf, mit denen sich das Abdeckelement beidseitig vom flexiblen Rohr auf dem Gegenstand abstützt. Gemäß dieser Ausführungsform ist eine durch die Innenseiten der Schenkel gebildete Ausnehmung zur Aufnahme des flexiblen Rohres so auf einen Durchmesser des flexiblen Rohres abgestimmt, dass das flexible Rohr an beiden Schenkeln anliegt. Dadurch wird das flexible Rohr durch Abdeckung mit dem Abdeckelement gleich auf dem Gegenstand fixiert. Bei einer vorteilhaften Variante dieser Ausführungsform ist eine dem flexiblen Rohr zugewandte Innenkontur der Abdeckung so an eine Außenkontur des flexiblen Rohres angepasst, so dass die Abdeckung an einer dem Gegenstand abgewandten Seite des flexiblen Rohres an diesem flächig, insbesondere formschlüssig, aufliegt.

Erfindungsgemäß ist vorgesehen, dass der Gegenstand ein Trägerrohr mit größerem Durchmesser als das flexible Rohr ist und dass die Stirnflächen des Abdeckelements, mit denen sich das Abdeckelement auf dem Trägerrohr abstützt, eine Krümmung aufweisen, die der Krümmung des Trägerrohres entspricht. Hierdurch kann ein Abrutschen oder Verrutschen des Abdeckelements auf dem Trägerrohr besser verhindert werden.

Ein alternativer jedoch nicht beanspruchter Aspekt sieht vor, dass der Gegenstand eine plane Aufstandsfläche aufweist, auf die das flexible Rohr gelegt ist. Hierbei können im Bereich der oder angrenzend zu den Stellen, an denen sich das Abdeckelement auf der planen Aufstandsfläche abstützt, Durchgangsöffnungen, insbesondere Schlitze, in der Aufstandsfläche vorgesehen sein, durch die das Spannband hindurch geführt ist.

Die Erfindung betrifft ferner ein Kraftfahrzeug, insbesondere ein Nutzfahrzeug, mit einer Anordnung zum Befestigen eines flexiblen Rohres wie in diesem Dokument beschrieben.

Weitere Einzelheiten und Vorteile der Erfindung werden im Folgenden unter Bezug auf die beigefügten Zeichnungen beschrieben. Es zeigen:
- Figur 1: eine Querschnittsansicht einer Anordnung zum Befestigen eines flexiblen Rohres gemäß eines nicht beanspruchten Aspekts;
- Figur 2: eine Querschnittsansicht einer Anordnung zum Befestigen eines flexiblen Rohres gemäß einer Ausführungsform der Erfindung; und
- Figur 3: schematisch eine Querschnittsansicht eines flexiblen Rohres im nicht-montierten und im montierten Zustand.

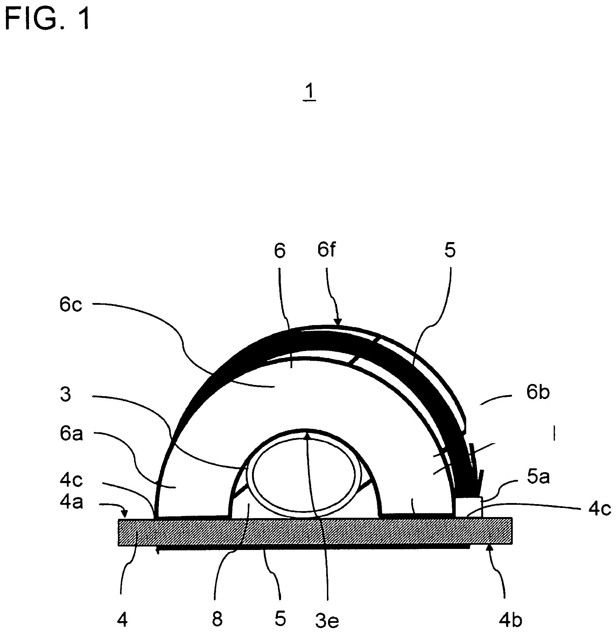

Figur 1 zeigt eine schematische Querschnittsansicht einer Anordnung zum Befestigen eines flexiblen Rohres gemäß eines nicht beanspruchten Aspekts. Das flexible Rohr 3 dient beispielsweise zur Leitungsdurchführung bei einem Fahrzeug und soll an einem Bauteil 4 mit einer planen Aufstandsfläche 4a befestigt werden. Das flexible Rohr 3 kann in herkömmlicher Weise ausgeführt sein, beispielsweise als Wellschlauch, wobei das Schlauchmaterial aus vulkanisiertem Kautschuk oder auch aus einem biegsamen Kunststoffmaterial bestehen kann.

Hierbei wird das flexible Rohr zunächst auf die plane Aufstandsfläche 4a gelegt und anschließend mit einem Abdeckelement 6 überdeckt.

Das Abdeckelement 6 ist als nichtelastisches Kunststoffbauteil ausgeführt. Das Abdeckelement hat einen bogenförmigen Querschnitt und weist zwei Schenkel 6a, 6b auf, die sich ausgehend von einer oberen mittigen Schulter 6c wegerstrecken und mit denen sich das Abdeckelement 6 beidseitig vom flexiblen Rohr 3 auf der planen Aufstandsfläche 4a des Gegenstands 4 abstützt.

Das Abdeckelement 6 überdeckt somit das flexible Rohr 3 an einem Längsabschnitt des flexiblen Rohres 3 bogenartig. Durch den bogenförmigen Querschnitt bzw. durch die Innenseiten der Schenkel wird eine Ausnehmung 8 zur Aufnahme des flexiblen Rohres 3 ausgebildet.

Hierbei ist die Ausnehmung 8 so auf den Durchmesser des flexiblen Rohres 3 abgestimmt bzw. so an die Außenkontur des flexiblen Rohres angepasst, dass die Abdeckung 6 an einem oberen Bereich des Rohres 3 flächig, insbesondere formschlüssig, aufliegt. Dieser Bereich des flexiblen Rohres 3, gegenüberliegend zu dem Gegenstand 4, ist in Figur 1 mit dem Bezugszeichen 3e gekennzeichnet.

Anschließend wird ein Kabelbinder 5 um die äußere bogenförmige Fläche 6f des Abdeckelements 6 geführt sowie um die dem flexiblen Rohr 3 abgewandte Seite 4b des Gegenstands 4 herumgeführt. Hierzu sind entsprechend Schlitze 4c in dem Gegenstand 4 zur Durchführung des Kabelbinders 5 eingebracht. Anschließend wird der Kabelbinder durch Verrastung am Kabelbinderkopf 5a gespannt.

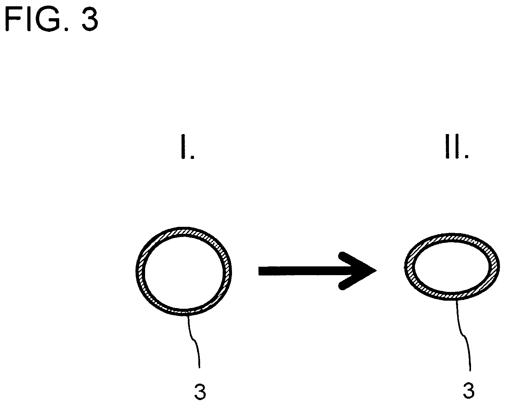

Der Kabelbinder 5 berührt somit an keiner Stelle direkt das flexible Rohr, sondern umschließt das Abdeckelement 6 und das Bauteil 4. Das Abdeckelement 6 überträgt die Spannkraft des Kabelbinders 5 auf das flexible Rohr 3, verhindert jedoch zugleich eine zu starke Quetschung des flexiblen Rohres 3. Dies ist schematisch und beispielhaft in Figur 3 dargestellt. Unter "I." ist der Zustand des flexiblen Rohres 3 im Normalzustand, d. h. im nicht-montierten Zustand dargestellt, in dem keine Spannkraft von außen auf die Wandung des flexiblen Rohres 3 wirkt. Der Querschnitt des flexiblen Rohres 3 ist kreisförmig. Unter "II." ist der Zustand des flexiblen Rohres 3 im montierten und gespannten Zustand der Figur 1 dargestellt. Durch die von dem Abdeckelement 6 ausgeübte Spannkraft verformt sich das flexible Rohr 3 lediglich leicht, ohne gequetscht zu werden.

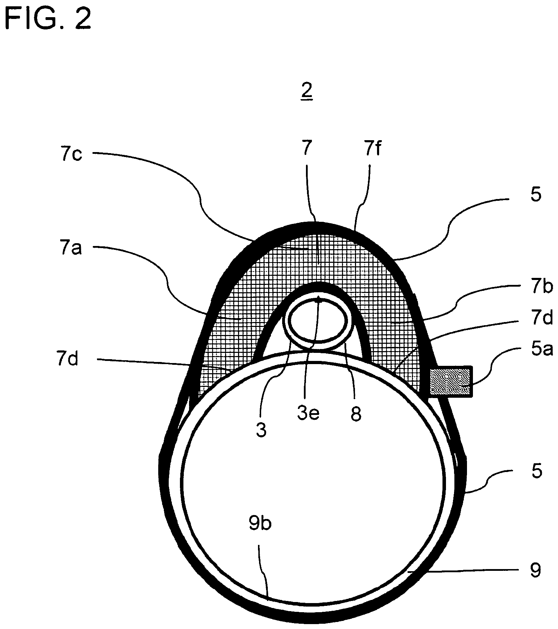

Figur 2 zeigt eine Querschnittsansicht einer Anordnung 2 zum Befestigen eines flexiblen Rohres gemäß einer Ausführungsform der Erfindung. Hierbei entsprechen Komponenten mit gleichen Bezugszeichen den Komponenten der Figur 1 und werden nicht gesondert beschrieben.

Eine Besonderheit dieser Ausführungsform liegt darin, dass der Gegenstand, auf dem das flexible Rohr 3 befestigt werden soll, ein Rohr, hier als Trägerrohr 9 bezeichnet, ist. Das als Quetschschutzbrücke dienende Abdeckelement 7 ist wieder ein Bauteil aus nichtelastischem Kunststoff mit einem bogenförmigen Querschnitt.

Zur Befestigung des flexiblen Rohres 3 am Trägerrohr 9 wird das flexible Rohr 3 zunächst auf das Trägerrohr 9 gelegt und anschließend mit dem Abdeckelement 7 überdeckt. Das Abdeckelement 7 weist wiederum zwei Schenkel 7a, 7b auf, die sich ausgehend von einer oberen mittigen Schulter 7c wegerstrecken und mit denen sich das Abdeckelement 7 beidseitig vom flexiblen Rohr 3 auf der äußeren Wandung des Trägerrohres 9 abstützt. Das Abdeckelement 7 überdeckt somit das flexible Rohr 3 an einem Längsabschnitt des flexiblen Rohres 3 bogenartig. Die Stirnflächen 7d der Schenkel 7a, 7b, mit denen sich das Abdeckelement auf dem Trägerrohr 3 abstützt, weisen eine Krümmung auf, die der Krümmung des Trägerrohres 9 entspricht. Hierbei ist die Ausnehmung 8 so auf den Durchmesser des flexiblen Rohres 3 abgestimmt bzw. so an die Außenkontur des flexiblen Rohres angepasst, dass die Abdeckung 7 an einem oberen Bereich 3e des Rohres 3 flächig, insbesondere formschlüssig, aufliegt.

Anschließend wird der Kabelbinder 5 um die äußere bogenförmige Fläche 7f des Abdeckelements 7 geführt sowie um die dem flexiblen Rohr 3 abgewandte Seite 9b des Trägerrohrs 9, d. h. um eine untere Kreisbogenhälfte des Trägerrohres 9, herumgeführt. Anschließend wird der Kabelbinder durch Verrastung am Kabelbinderkopf 5a gespannt.

Auch gemäß dieser Ausführungsform 2 berührt der Kabelbinder 5 an keiner Stelle direkt das flexible Rohr 3, sondern ist außen herum um das Abdeckelement 7 und das Trägerrohr 9 geführt. Hierdurch kann das flexible Rohr 3 schnell und sicher am Trägerrohr 9 befestigt werden, ohne dass es zu einer zu starken Quetschung des flexiblen Rohres 3 kommt. Die Erfindung soll nicht auf die offenbarten Ausführungsbeispiele begrenzt sein, sondern soll alle Ausführungsbeispiele umfassen, die in den Bereich der beigefügten Patentansprüche fallen.

### Bezugszeichenliste

- 1, 2: Anordnung zum Befestigen eines flexiblen Rohres
- 3: Flexibles Rohr
- 3e: Oberer Bereich des flexiblen Rohres
- 4: Gegenstand
- 4a: Plane Aufstandsfläche
- 4b: Unterseite des Gegenstands
- 4c: Schlitze
- 5: Spannband, insbesondere Kabelbinder
- 5a: Kabelbinderkopf
- 6, 7: Abdeckelement
- 6a, 6b, 7a, 7b: Schenkel
- 7c, 6c: Schulter
- 7d: Schenkelstirnfläche
- 6f, 7f: Äußere bogenförmige Fläche
- 8: Ausnehmung
- 9: Trägerrohr
- 9b: zum flexiblen Rohr abgewandte Seite des Trägerrohrs

## Patentansprüche

1. Anordnung (2) zum Befestigen eines flexiblen Rohres (3), insbesondere eines Wellrohres, an einem Trägerrohr (9) mit größerem Durchmesser als das flexible Rohr (3) umfassend:
- das flexible Rohr (3), das auf das Trägerrohr (9) gelegt werden kann;
- ein Abdeckelement (7), welches sich beidseitig vom flexiblen Rohr (3) auf das Trägerrohr (9) abstützen kann und das flexible Rohr (3) an zumindest einem Abschnitt bogenartig überdecken kann; und
- ein Spannband (5), das um eine Außenseite (7f) des Abdeckelements (7) und um eine dem flexiblen Rohr (3) abgewandte Seite (9b) des Trägerrohrs (9) herumgeführt werden kann, **dadurch gekennzeichnet,**
**dass** die Stirnflächen (7d) des Abdeckelements (7), mit denen sich das Abdeckelement (7) auf dem Trägerrohr (9) abstützen kann, eine Krümmung aufweisen, die der Krümmung des Trägerrohres (9) entspricht.

2. Anordnung (2) nach Anspruch 1, **dadurch gekennzeichnet, dass** das Abdeckelement einen U-förmigen, einen bogenförmigen oder einen V-förmigen Querschnitt zur Abdeckung des flexiblen Rohres (3) aufweist.

3. Anordnung nach Anspruch 1 oder 2, **dadurch gekennzeichnet,**
a) **dass** das Abdeckelement (7) zwei Schenkel (7a, 7b) aufweist, mit denen sich das Abdeckelement (7) beidseitig vom flexiblen Rohr (3) auf das Trägerrohr (9) abstützt; und
b) **dass** eine durch die Innenseiten der Schenkel (7a, 7b) gebildete Ausnehmung (8) zur Aufnahme des flexiblen Rohres (3) so auf einen Durchmesser des flexiblen Rohres (3) abgestimmt ist, dass das flexible Rohr (3) an beiden Schenkeln (7a, 7b) anliegt.

4. Anordnung nach einem der vorhergehenden Ansprüche, **dadurch gekennzeichnet, dass** eine dem flexiblen Rohr (3) zugewandte Innenkontur der Abdeckung (7) so an eine Außenkontur des flexiblen Rohres (3) angepasst ist, dass die Abdeckung (7) an einer dem Trägerrohr (9) abgewandten Seite des flexiblen Rohres (3) an diesem flächig, insbesondere formschlüssig, aufliegt.

5. Anordnung nach einem der vorhergehenden Ansprüche, **dadurch gekennzeichnet,**
a) **dass** das Spannband (5) als Rastband, weiter vorzugsweise als selbstverrastendes Rastband, ausgeführt ist; und/oder
b) **dass** das Spannband (5) ein Kabelbinder ist.

6. Anordnung nach einem der vorhergehenden Ansprüche, **dadurch gekennzeichnet,**
a) **dass** das Abdeckelement (7) aus einem nichtelastischen Werkstoff hergestellt ist; und/oder
b) **dass** das Abdeckelement (7) als nichtelastisches Kunststoffbauteil ausgeführt ist.

7. Anordnung nach einem der vorhergehenden Ansprüche, **dadurch gekennzeichnet,**
a) **dass** das flexible Rohr (3) ein Wellrohr oder ein Wellschlauch ist; und/oder
b) **dass** in dem flexiblen Rohr (3) mindestens eine elektrische Leitung geführt ist.

8. Kraftfahrzeug, insbesondere Nutzfahrzeug, mit einer Anordnung (2) nach einem der vorhergehenden Ansprüche.

## Claims

1. Arrangement (2) for fastening a flexible tube (3), in particular a corrugated tube, to a carrier tube (9) having a larger diameter than the flexible tube (3), comprising:
- the flexible tube (3), which can be placed on the carrier tube (9);
- a covering element (7), which can be supported on the carrier tube (9) on both sides of the flexible tube (3) and can cover at least a portion of the flexible tube (3) in an arcuate manner; and
- a band clamp (5), which can be guided around an outer side (7f) of the covering element (7) and around a side (9b) of the carrier tube (9) that faces away from the flexible tube (3),
**characterized**
**in that** the end faces (7d) of the covering element (7), by way of which the covering element (7) can be supported on the carrier tube (9), have a curvature which corresponds to the curvature of the carrier tube (9).

2. Arrangement (2) according to Claim 1, **characterized in that** the covering element has a U-shaped, arcuate or V-shaped cross section for covering the flexible tube (3).

3. Arrangement according to Claim 1 or 2, **characterized**
a) **in that** the covering element (7) has two legs (7a, 7b), by way of which the covering element (7) is supported on the carrier tube (9) on both sides of the flexible tube (3); and
b) **in that** a recess (8), formed by the inner sides of the legs (7a, 7b), for receiving the flexible tube (3) is matched to a diameter of the flexible tube (3) such that the flexible tube (3) rests against both legs (7a, 7b).

4. Arrangement according to one of the preceding claims, **characterized in that** an inner contour, facing the flexible tube (3), of the cover (7) is matched to an outer contour of the flexible tube (3) such that the cover (7) rests in a flat, in particular form-fitting manner against a side of the flexible tube (3) that faces away from the carrier tube (9).

5. Arrangement according to one of the preceding claims, **characterized**
a) **in that** the band clamp (5) is embodied as a locking band, more preferably as a self-locking locking band; and/or
b) **in that** the band clamp (5) is a cable tie.

6. Arrangement according to one of the preceding claims, **characterized**
a) **in that** the covering element (7) is produced from a non-elastic material; and/or
b) **in that** the covering element (7) is embodied as a non-elastic plastics component.

7. Arrangement according to one of the preceding claims, **characterized**
a) **in that** the flexible tube (3) is a corrugated tube or a corrugated hose; and/or
b) **in that** at least one electric line is guided in the flexible tube (3).

8. Motor vehicle, in particular commercial vehicle, having an arrangement (2) according to one of the preceding claims.

## Revendications

1. Système (2) de fixation d'un tuyau souple (3), en particulier d'un tuyau ondulé, à un tuyau de support (9) de plus grand diamètre que le tuyau souple (3), comprenant:
- le tuyau souple (3), qui peut être posé sur le tuyau de support (9),
- un élément de recouvrement (7), qui peut s'appuyer sur le tuyau de support (9) de part et d'autre du tuyau souple (3) et qui peut recouvrir en forme d'arc le tuyau souple (3) sur au moins une partie; et
- une bande de serrage (5), qui peut être conduite autour d'un côté extérieur (7f) de l'élément de recouvrement (7) et autour d'un côté (9b) du tuyau de support (9) éloigné du tuyau souple (3),
**caractérisé en ce que** les faces frontales (7d) de l'élément de recouvrement (7), avec lesquelles l'élément de recouvrement (7) peut s'appuyer sur le tuyau de support (9), présentent une courbure qui correspond à la courbure du tuyau de support (9).

2. Système (2) selon la revendication 1, **caractérisé en ce que** l'élément de recouvrement présente une section transversale en forme de U, en forme d'arc ou en forme de V pour recouvrir le tuyau souple (3).

3. Système selon la revendication 1 ou 2, **caractérisé en ce que**
a) l'élément de recouvrement (7) présente deux branches (7a, 7b), avec lesquelles l'élément de recouvrement (7) s'appuie sur le tuyau de support (9) de part et d'autre du tuyau souple (3); et
b) un évidement (8) formé par les côtés intérieurs des branches (7a, 7b) pour loger le tuyau souple (3) est accordé à un diamètre du tuyau souple (3), de telle manière que le tuyau souple (3) s'applique sur les deux branches (7a, 7b).

4. Système selon l'une quelconque des revendications précédentes, **caractérisé en ce qu'**un contour intérieur du recouvrement (7) tourné vers le tuyau souple (3) est adapté à un contour extérieur du tuyau souple (3) de telle manière que le recouvrement (7) s'applique sur un côté du tuyau souple (3) éloigné du tuyau de support (9) en surface, en particulier en complémentarité de forme, sur celui-ci.

5. Système selon l'une quelconque des revendications précédentes, **caractérisé en ce que**
a) la bande de serrage (5) est formée par une bande à encliquetage, de préférence par une bande à encliquetage automatique, et/ou
b) la bande de serrage (5) est un collier serre-câbles.

6. Système selon l'une quelconque des revendications précédentes, **caractérisé en ce que**
a) l'élément de recouvrement (7) est fabriqué en un matériau non élastique; et/ou
b) l'élément de recouvrement (7) est formé par un composant en matière plastique non élastique.

7. Système selon l'une quelconque des revendications précédentes, **caractérisé en ce que**
a) le tuyau souple (3) est un tuyau ondulé ou un flexible ondulé; et/ou
b) au moins un conducteur électrique est conduit dans le tuyau souple (3).

8. Véhicule automobile, en particulier véhicule utilitaire, avec un système (2) selon l'une quelconque des revendications précédentes.
